# EUROPEAN PATENT SPECIFICATION

(11) **EP 2 163 102 B1**
(45) Date of publication and mention of the grant of the patent: **28.11.2012**
(21) Application number: 08751300.8
(22) Date of filing: 22.05.2008
(51) Int. Cl.: H04N 9/73, G09G 5/00, H04N 5/14

(54) **VISUALIZING OBJECTS OF A VIDEO SIGNAL**
VISUALISIERUNG VON OBJEKTEN EINES VIDEOSIGNALS
VISUALISATION D'OBJETS D'UN SIGNAL VIDÉO

(30) Priority: 29.05.2007 EP 07109073
(43) Date of publication of application: 17.03.2010
(73) Proprietor: TP Vision Holding B.V., 5656 AE Eindhoven (NL)
(72) Inventor: SEUNTIENS, Petrus, J., H., NL-5656 AE Eindhoven (NL); SALTERS, Bart, A., NL-5656 AE Eindhoven (NL)
(74) Representative: Hutter, Jacobus Johannes
(86) International application number: PCT/IB2008/052022
(87) International publication number: WO 2008/146214

(56) References cited:
- EP-A- 1 843 581
- WO-A-03/101098
- WO-A-2005/017739
- WO-A-2007/099494

## Description

### FIELD OF THE INVENTION

The invention relates to visualizing objects of a video signal for displaying on a monitor, and in particular to visualize motion of objects using various light sources.

### BACKGROUND OF THE INVENTION

Monitors, such as LCD televisions, are continuous subject to improvements in image quality and image size. However, in order to offer users greater viewing experiences other improvements than image quality and image size are required.

For example, while watching an action movie, it would be desirable to provide the user with an enhanced experience of the action and dynamics of the movie. Accordingly, it may be seen as a problem to improve to provide features for enhancing the experiences of dynamics in the movie.

EP 1 551 178 discloses such an improvement to a television by providing a supplementary visual display system for use in conjunction with a display device including an image display region for presenting images to a viewer. The system comprises: one or more illumination sources which at least partially peripherally surround the image display region; monitoring components for monitoring audio program content and/or intensity and/or color in one or more sub-regions of the image display region; and controlling components for controlling light radiation emitted in use from the one or more illumination sources in response to at least one of the image and/or audio indicative signals so as to provide at least a partial spatial extension of the image display region.

While the improvement disclosed in EP 1 551 178 enhances the user's viewing experience, it may be possible to improve in particular the viewers experience of viewing dynamics scenes in a movie.

WO 2005/017739 discloses an ambi-light television where the trajectory of a moving object is extrapolated into the surround image. It does not disclose objects that are not yet in the monitor area.

### SUMMARY OF THE INVENTION

Accordingly, the invention preferably seeks to mitigate, alleviate or eliminate one or more of the above mentioned problems singly or in any combination. In particular, it may be seen as an object of the present invention to provide a control device capable of visualizing an object that has appeared or will appear on a monitor by controlling light emission from light emitters for generating a spatial light pattern resembling the object.

This object and several other objects are obtained in a first aspect of the invention by providing a control device for providing visualization of an object of an image signal comprising video content for displaying on a monitor, the control device comprising:
- a light emitter controller connectable with light emitters, the light emitter controller being configured to generate a spatial light pattern for visualizing the object by controlling light emission from the light emitters using object motion data derived from the image signal.

The invention is particularly, but not exclusively, advantageous for visualizing an object by controlling light emission from light emitters for generating a spatial light pattern which resembles the motion of one or more objects.

Thus, in an embodiment of the invention the control device is capable of generating a spatial light pattern, for example in the form of illuminated pixels on a wall. The spatial light pattern may visualize objects which have just moved out of the area of the monitor or is about to move into the monitor. The spatial light pattern may be provided by light emission from light emitters being controlled by a light emitter controller in dependence of object motion data which describes the motion of objects. The object motion data describes the motion of an object and is used for determining the spatial light pattern. Thus, object motion data may comprise data describing the motional direction, position, velocity and acceleration of the object. Alternatively or additionally, the object motion data may be positions of an object at different instants so that the different positions and time difference of the different positions provide data for deriving for example velocity and motional direction.

The object motion data may be provided from a secondary device, for example an image processor, that is not part of the control device, the object motion data may be embedded in the image signal as a secondary image signal, or the object motion data may be derived by a device comprised by the control device.

It may be an advantage of the first aspect of the invention that the spatial light pattern provides the viewer of the monitor with an enhanced experience of dynamic scenes of a movie. For example the viewer may experience that a driving car appearing on the monitor moves out of the monitor. The viewer may also experience a spatial light pattern visualizing a moving object before the object, for example a car, actually appears on the monitor, for example moving into the monitor from the left edge of the monitor. Similarly the viewer may experience a spatial light pattern visualizing a plurality of moving objects moving out of the monitor or moving into the monitor.

In an embodiment the light emitter controller of the light emitter controller may be configured to control light emission from the light emitters by adjusting light emission from individual light emitters in response to the object motion data so that a time-dependence of the spatial light pattern visualizes motion of an object. The time-dependence of the spatial light pattern corresponds to or visualizes the motion of the object. Accordingly, by adjusting the light emission from individual light emitters it may be possible to improve the visualization of time-dependence and spatial resemblance.

In an embodiment the light emitter controller of control device may be configured to control light emission from the light emitters depending on a present object position and present object motion data derived from the image signal, where the present object position is defined in a field of view comprising the spatial light pattern and the monitor. The field of view may be understood as the area or space constituted by the monitor and spatial light pattern of pixels 110. It may be seen as an advantage that the present object position is not only defined within the monitor but also within the area of spatial light patter of pixels, since this provides the possibility for visualizing objects that are to appear on the monitor in future time.

In an embodiment the light emitter controller of the control device may be configured to control light emission from the light emitters depending on a period of time and/or a distance separating the present object position and a fixed positional reference. Thus, a period of time or distance separating the present object position (defined within the monitor or the spatial light pattern) and the positional reference may be used to determine one or more of for example the instant of illuminating pixels 110, the position of illuminating pixels 110, and the direction, speed and/or acceleration of the spatial light pattern of pixels.

In an embodiment the light emitter controller of the control device may be configured to control light emission from the light emitters depending on a present object position and a future object position, the present and future object positions being derived from the image signal, and the present and future object positions being defined in a field of view comprising the spatial light pattern and the monitor. Accordingly, from the knowledge of two positions comprising a present and any future position it is possible to determine the how the pixels should be illuminated in order to visualize the object. Thus, whether the present object position is within the spatial light pattern or within the monitor and whether the future object position is within the spatial light pattern or within the monitor it is possible to determine when and where pixels should be illuminated to provide visualization of an object.

In an embodiment the light emitter controller is configured to control light emission from the light emitters depending on a period of time and/or a distance separating the present object position and the future object position. Thus, a period of time or distance separating the present object position (defined within the monitor or the spatial light pattern) and future object position (defined within the monitor or the spatial light pattern) may be used to determine one or more of for example the instant of illuminating pixels, the position of illuminating pixels, and the direction, speed and/or acceleration of the spatial light pattern of pixels.

In an embodiment the light emitter controller may be configured to control light emission from the light emitters by adjusting color and/or intensity of the light emission from individual light emitters so that the color and/or intensity of the spatial light pattern resembles color and/or intensity of the object of the image signal. It may be an advantage to adapt the color and/or intensity of the illuminated pixels to the object since this may provide an improved visualization and, therefore, an enhanced viewing experience of the viewer.

In a second aspect the present invention relates to an ambient light device configured to visualize objects of an image signal comprising video content for displaying on a monitor, the ambient light device comprising:
- the control device according to the first aspect, and
- an ambient light source comprising the light emitters.

It may be an advantage that the ambient light device may be used in connection with existing TV-sets for enhancing viewing experience.

In a third aspect the present invention relates to a display device configured to visualize objects of an image signal comprising video content for displaying on a monitor, the image display device comprising:
- the ambient light device according to the second aspect, and
- a monitor for displaying the video content.

It may be an advantage that the monitor, for example a TV, comprises a signal processor configured to provide object motion data from the image signal.

In a fourth aspect the present aspect relates to a method for visualizing an object of an image signal comprising video content for displaying on a monitor, the method comprising:
- generating a spatial light pattern for visualizing the object using a light emitter controller connectable with light emitters for controlling light emission from the light emitters using object motion data derived from the image signal.

In a fifth aspect the present invention relates to a computer program enabling a processor to carry out the method of the fourth aspect.

The first, second, third, fourth and fifth aspect of the present invention may each be combined with any of the other aspects. These and other aspects of the invention will be apparent from and elucidated with reference to the embodiments described hereinafter.

### BRIEF DESCRIPTION OF THE FIGURES

The present invention will now be explained, by way of example only, with reference to the accompanying Figures, where:
Figure 1 shows a display device 100 comprising a monitor 101, an ambient light source 102 and a control device 103.
Figure 2a shows a sequence an object 120 moving from an initial present position within the monitor 101 towards the border of the monitor 101 where the continued motion of the object is visualized by pixels 201-203.
Figure 2b shows the sequence of a visualized object 120 moving from an initial position outside the monitor 101 towards the border of the monitor 101 where the continued motion is shown on the monitor.
Figure 3a and 3b shows how the present positions (xp) and future positions (xf) are used to determine how pixels 110 should be controlled in order to visualize object motion.

### DETAILED DESCRIPTION OF AN EMBODIMENT

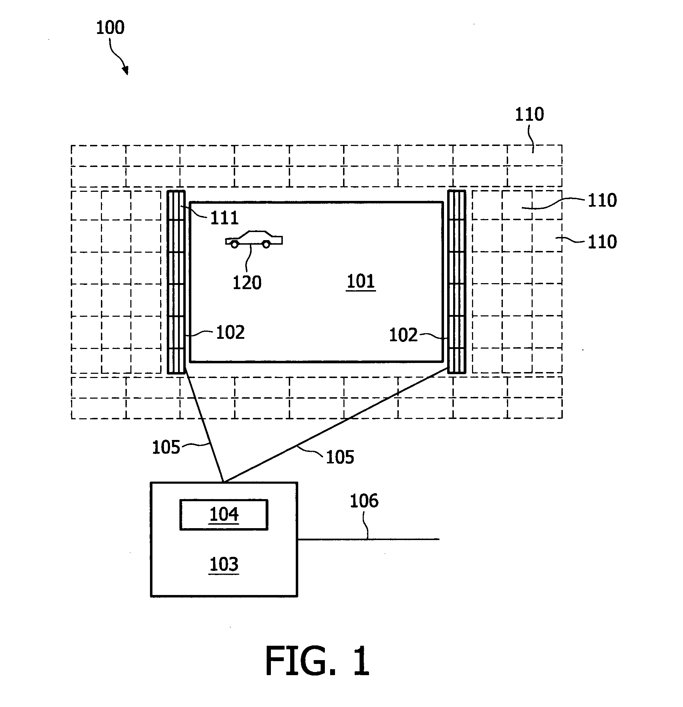

Figure 1 shows a display device 100 comprising a monitor 101, an ambient light source 102 and a control device 103.

The monitor 101 may be any monitor LCD, OLED, CRT or other monitors or projection devices for displaying images. The ambient light source 102 comprises light emitters 111 capable of emitting radiation of light visible to the human eye. The light emitters may be light emitting diodes, lasers, incandescent lamps or other light emitting devices. The ambient light source 102 may also be comprised by a LCD, OLED or plasma monitors.

The function of the ambient light source 102 is to form pixels 110 visible for a viewer watching the monitor 101. The pixels 110 can be formed or pictured on a wall behind or parallel with the monitor 101 by projecting light emitted from the light emitters 111 onto the wall. As indicated on Figure 1 there may be a one-to-one correspondence between the light emitter 111 and the pixels 110, however, each pixel 110 may also be formed from light projected from a plurality of light emitters. In alternative embodiments the pixels are formed by scanning a light beam, eg a laser beam, over the area of the pixels 110 using for example a scanning mirror. When illuminated, the pixels 110 may be monochrome or colored. Colored pixels 110 may be formed by mixing colors, for example by mixing light emitted from red, green and blue light sources. For example, each light emitter may comprise red, green and blue light emitting diodes (LEDs).

The pixels 110 can also be formed by LCD, OLED or plasma monitors emitting light towards the viewer or the pixels 110 may formed by other light sources by emitting light onto a screen or directly towards the viewer.

Accordingly, it should be understood that light emitters comprise any kind of light emitting device capable of forming pixels 110 including light emitting diodes, lasers, lasers combined with scanning devices, LCD monitors, OLED monitors and plasma monitors.

The ambient light source 102 may be integrated with the monitor 101 or TV-set and, therefore, may not be visible as schematically indicated in Figure 1. For example the ambient light device may be mounted on the backside of the TV-set for projection of light onto an opposite wall.

The light emitters 111 may form a matrix of light emitters 111 arranged adjacent to one or more sides of the monitor 101. However, the light emitters 111 may be arranged in arbitrary ways capable of forming pixels 110, for example using various lens optics for projecting light onto a wall so that the projected light forms pixels 110. The use of one or more light emitting sources, for examples lasers, radiating light onto one or more scanning mirrors, so that reflected light from the mirrors form pixels 110, is also a feasible solution. The number of light emitters 111 or the number of pixels 110 may be any number sufficient for the viewer to experience an object 120 moving out of the monitor 101 or into the monitor 101. Accordingly, the number of light emitters 111 or the number of pixels 110 may be any number sufficient to establish a resolution of pixels and an area of pixel distribution for providing the viewer with a convincing viewing experience. For example the number of pixels may be between 10 and 100 or even up to 2000 generated by for example light emitting diodes. However, using lasers in combinations with scanning mirrors may increase the number of pixels from thousands up to several millions of pixels. Pixels 110 may also be generated by LCD monitors or other technologies used for monitors 101; in this case the number of pixels 110 may also increase the number of pixels from thousands up to several millions of pixels.

The pixels 110, as illustrated in Figure 1 may have other shapes than rectangular or square shapes, that is, the shapes of pixels may be circular, elliptical or polygonal. Furthermore, different pixels may have different size, for example pixels close to the monitor may be smaller than those farthest away from the monitor. Similarly, the pixels 110 need not by uniformly distributed as shown in Figure 1. Accordingly, since the pixels 110 may have any form and distribution, the pattern of illuminated pixels 110 will generally be referred to as a spatial light pattern.

The monitor 101 is capable of displaying an image signal from a DVD player, the Internet, a satellite receiver or other image signal sources. The image signal comprises video content possibly comprising an object 120 such as a car.

The control device 103 comprising a light emitter controller 104 is capable of controlling the emission of light from individual light emitters 111 and, thereby, controlling the time-dependent spatial light pattern of pixels 110. That is, by switching on or off individual light emitters 111, adjusting the intensity of light emitted from individual light emitters 111 and/or adjusting the color of light emitted from individual light emitters 111, the corresponding light intensity and color of each pixel 110 and thereby the time-dependent spatial light pattern of the pixels 110 is controllable by the control device 103. The control device 103 controls the light emitter 111 via an electrical connection 105 between the light emitter controller 104 and the one or more ambient light sources 102.

When reference is made to the spatial light pattern of pixels 110 or equivalently the spatial light pattern 110, this should be understood as the area, space or field of view where pixels 110 may be illuminated, that is, even though the pixels 110 are not visible since they are not illuminated the pixels 110 are still considered as a spatial light pattern 110.

In order to enhance the viewers experience of viewing the monitor 101, the control device 103 is capable of controlling the timing, light intensity and color of each pixel 110 so that, in an example, when the car 120 tends to move out of the border of the monitor 101, the light emitters 111 are controlled so as to provide a visualization of the car 120 moving out of the monitor 101.

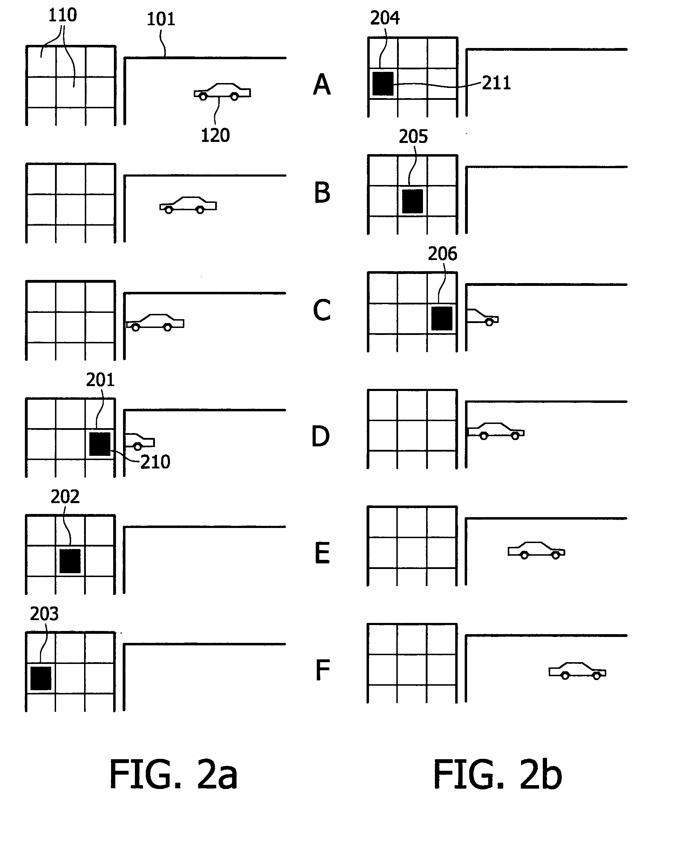

Figure 2a shows the sequence A-F of a car 120 moving from an initial position within the monitor 101 towards the border of the monitor 101 during steps A-C. As the car 120 moves out of the screen in step D, the adjacent pixel 201 is illuminated to form a visible pixel 210, subsequent in step E the next pixel 202 is illuminated and finally in step F pixel 203 is illuminated. Accordingly, the sequence of pixels 201-203 being illuminated provides the viewer with a visualization of the car 120 moving beyond the border of the monitor 101. Thus, each of the visible pixels 210 corresponds to an object 120 of the image signal.

Figure 2b shows the sequence A-F of a car 120 moving from an initial position outside the monitor 101 towards the border of the monitor 101 during steps A-C. The motion of the car during steps A-C is visualized by illuminating the pixels 204-206 to form a sequence of illuminated pixels 211. In steps D-F, the motion of the car 120 continues within the area of the monitor 101. Accordingly, the sequence of pixels 204-206 being illuminated prior to the object is visible within the monitor provides the viewer with a visualization of the car 120 even before the car is visible on the monitor 101.

Thus, a present position of the object 120 may be the position of the object 120 within the monitor 101 1 as shown in situation A in Figure 2a, or a present position of the object 120 may be the position of the object 120 visualized by the illumination 211 of pixel 204 in situation A in Figure 2b. Accordingly, object positions are defined in the viewer's field of view comprising the spatial light pattern of pixels 110 and the monitor 101.

The control device 103 is configure to control the time-dependent spatial light pattern generated by light emission from the light emitters 111 so that the motion of objects 120 formed by pixels 110 resembles either the previous or the future motion of the object within the monitor 101. The motion of the object comprises object motion direction, object velocity and object acceleration.

In order to control motion of objects 120 formed by pixels 110, the control device 103 needs to know various object motion data of the object 120. The object motion data can be derived from the image signal supplied to the monitor 101. For that purpose an image processing device can be used to identify objects contained in the image signal and derive the motional parameters of the object, eg. direction, velocity and acceleration.

Thus, object motion data may comprise one or more data of object position, including present and future object positions, motional direction of objects, velocity and acceleration of objects. Since the image signal may comprise a one or more objects, the object motion data correspondingly represents those one or more objects. The image processing device may be implemented in the monitor 101. As an example digital monitors have image processing devices implemented for identifying objects 120 and estimating motion of objects 120. The image processing devices may for example divide the image to be shown on the monitor into pixel blocks comprising 8x8 pixels and analyze each pixel block for determining color properties and motional properties of each block. The image processing device may also determine an object comprised by pixel blocks having for example similar motional properties.

Accordingly, the object motion data derived by the image processing device may be supplied to the light emitter controller 104 via connection 106 comprising electrical, optical and wireless connections 106. Alternatively, the control device 103 may be provided with an image processing device for providing object motion data to the light emitter controller 104.

The object motion data may also comprise the size of the object so that the light emitter controller 104 is capable of determine the number of pixels 110 to be illuminated so that the size of the illuminated pixels 110 resembles the size of the object 120.

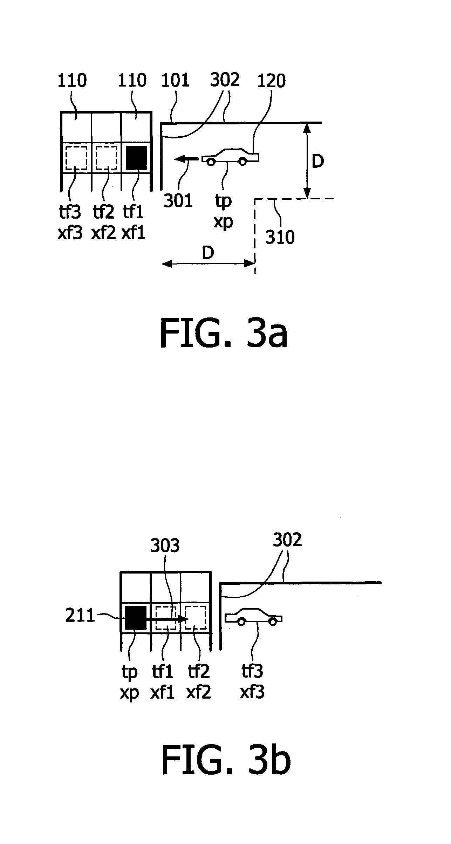

Figure 3a shows the present position xp of the object 120 within the monitor 101 at present time tp. The present object motion data of object 120 is indicated by arrow 301. Using the present object motion data 301 comprising one or more values of object position, direction, velocity, acceleration and size, it is possible to calculate or estimate when and/or where the object passes the edge 302 of the monitor and enters the space of spatial light pattern containing pixels 110. The future time tf1 describing when the object passes the edge 302 and the future position xf1 describing the position where the object passes the edge 302 can be used by the light emitter controller 103 for controlling the time-dependent spatial light pattern of the pixels 110. That is, if the future time tf1 and the future position xf1 are known, the pixel 110 having position xf1 can be illuminated at time tf1 for visualizing the object 120. Similarly, since the light emitter controller 104 knows the object motion data 301 of object 120 at least at the present time tp, the position xf of the object 120 at any future time tf can be predicted. With knowledge of the future motional path of the object 120, the light emitter controller knows which pixels 110 at positions xf should be illuminated at particular future times, tf, in order to visualize the motion of the object 120.

For example, the light emitter controller 104 can determine that subsequent to illuminating pixel 110 at position xf1, another pixel 110 at position xf2 should be illuminated at time tf2, and subsequently, the pixel at position xf3 should be illuminated at time tf3. At the same time as the illumination of a subsequent pixel (eg at position xf2) is initiated, the illumination of the previous pixel (eg at position xf1) is stopped, gradually decreased or maintained for a fixed or variable period of time. Similarly, the intensity of illumination of a subsequent pixel (eg at position xf2) may be changed from zero to full intensity instantly, or the intensity may be increased gradually over some period of time.

In general, instead of using an edge 302 for determining when an object 120 moves out of the monitor 101, any positional reference line or point may be used by the light emitter controller 104. For example a positional reference located a distance from the edge 302, inside or outside the monitor, may be used for deciding when an object 120 is defined to have moved out of the monitor. In addition a period of time and/or a distance separating the present object position xp and fixed positional reference may be used by the light emitter controller to control light emission from the light emitters. Clearly, an edge 302 may be considered as a positional reference line.

Figure 3b shows the present position xp1 of the object 120 within the field of pixels 110 at present time tp1. The present object motion data of object 120 is indicated by arrow 303. Using the present object motion data 303 comprising one or more values of object position, direction, velocity and acceleration it is possible to calculate or estimate the time tf1 when the subsequent pixel 110 at position xf1 should be illuminated, alternatively the time tf3 when the object passes the edge 302 and enters the monitor at position xf3.

The motion of objects 120 that have not appeared within the monitor yet, but are present within the field of the spatial light pattern of pixels 110, can be determined and visualized by delaying the image signal so that an object present within the pixels 110 can be determined by calculating object's motion backwards in time.

The situation described in relation to Figure 3a is analogous to the situation described in relation to Figure 3b, since the only difference is the location of the present position xp, that is, in Figure 3a the present position xf is within the monitor 301 and in Figure 3b the present position in within the field of view of the emitters 110. Accordingly, examples of methods for controlling light emitters 111 for turning on and off pixels 110 in the situation where an object 120 first appears within the field of pixels 110 as illustrated in Figure 3b follows the example as described in relation to Figure 3a where an object 120 first appear within the monitor 101.

Both in the situation where the object 120 moves towards the monitor in Figure 3b and the situation where the object 120 moves out of the monitor in Figure 3a the light emitter controller 104 is configured to control light emission from the light emitters 111 depending on the present object position xp and the present object motion data 301,303 whether the present object position xp is within the field of the spatial light pattern or within the monitor 101. The object motion data 301, 303 may be derived from the image signal by an existing image processing device implemented in the monitor 101 or implemented in the control device 103, alternatively the object motion data may be embedded in the image signal and supplied directly to the control device 101.

Alternatively, both in the situation where the object 120 moves towards the monitor in Figure 3b and the situation where the object 120 moves out of the monitor in Figure 3a, the light emitter controller 104 is configured to control light emission from the light emitters 111 depending on a present object position xp and a future object position xf. The future object position xf may be a subsequent position within the monitor or within the field of the pixels 110. When the light emitter controller 104 is provided with information about a future object position xf and time tf, the future time tf1 describing when the pixel 110 at position xf1 should be illuminated can be determined, for example by interpolation using present (xp,tp) and future (xf, tf) positions and times.

Provided with the present and future objects positions, the light emitter controller 104 can determine the period of time and distance separating the present object position and the future object position and use that information for calculating the times tf for illuminating the first pixel and subsequent pixels 110 at various positions xf.

Clearly, there are alternative methods for determining the times tf for illuminating various pixels 110 at positions xf. However, the general idea is to control light emission from the light emitters 111 by adjusting or switching the intensity of light emission from individual light emitters in response to the object motion data so that the time-dependent spatial light pattern within the field of pixels 110 visualizes future or past object motion within the area of the monitor 101.

The light emitter controller may be configured so as to only consider objects 120 within a distance D from the edges 302. Thus, only objects located within the zone between the edges 302 and the boundary zone 310 are analyzed by the light emitter controller 104 in order to visualize the object when the object passes the edges 302.

In order to further enhance the visualization of the object 120 the light emitter controller 104 may be configured to control the color alternatively or additionally the intensity of light emission from the light emitters by adjusting color and/or intensity of the light emission from individual light emitters so that the color and/or intensity of the time-dependent spatial light pattern of illuminated pixels 110 resembles color and/or intensity of the object of the image signal as it will appear on the monitor.

The control device 103 may be an electronic device comprising one or more other devices including the light emitter controller 104. The light emitter controller may be an electronic circuit board, a computer, an integrated circuit, or a chip device configured for controlling visualization of an object 120 using the light emitters 110. The method controlling visualization may be implemented in the light emitter controller 104 as hardware using electronic components, or the method may be implemented as software or firmware.

Thus a computer program may be provided for enabling visualizing an object 120 of the image signal comprising video content for displaying on the monitor 101, where the method comprises generating a spatial light pattern for visualizing the object using the light emitter controller 104 connectable with light emitters 111 for controlling light emission from the light emitters using object motion data 301,303 derived from the image signal.

The control device 103 may be integrated with the ambient light source 102 or the control device 103 may be made connectable to the ambient light source 102 using electrical wires, optical fibers or wireless technology. A product including the control device 103 and the ambient light source 102 may be made commercially available and sold as a single ambient light device for use with any type and brand of monitors 101. Alternatively, the control device 103 and the ambient light source 102 may made commercially available and sold as a distinct products for use with any type and brand of monitors 101, ambient light source 102 and controller 103.

The control device 103 and the ambient light source 102 may be integrated in a monitor 101 or made connectable with a monitor 101 using electrical wires, optical fibers or wireless technology. A product including the control device 103, the ambient light source 102 and the monitor 101 may be made commercially available and sold as a display device, television, projector or similar device.

Although the present invention has been described in connection with the specified embodiments, it is not intended to be limited to the specific form set forth herein. Rather, the scope of the present invention is limited only by the accompanying claims. In the claims, the term "comprising" does not exclude the presence of other elements or steps. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Furthermore, reference signs in the claims shall not be construed as limiting the scope.

## Claims

1. A control device (103) for providing visualization of an object (120) of an image signal comprising video content for displaying on a monitor (101), the control device (103) comprising:
- a light emitter controller (104) connected to light emitters (111) of an ambient light source (102) and configured to control said light emitters (111), the light emitter controller (104) being configured to generate a spatial light pattern for visualizing the object (120) by controlling light emission from the light emitters (111) using object motion data (301,303) derived from the image signal, and wherein
- the light emitter controller (104) is configured to control the light emission from the light emitters (111) depending on where the object passes an edge (302) of the monitor (101), **characterized in that** said controlling light emission is performed by using motion data of an object which is about to move into the monitor.

2. A control device according to claim 1, wherein the light emitter controller (104) is configured to control light emission from the light emitters by adjusting light emission from individual light emitters (111) in response to the object motion data (301,303) so that a time-dependence of the spatial light pattern visualizes motion of the object (120).

3. A control device according to claim 1, wherein the light emitter controller (104) is configured to control light emission from the light emitters (111) depending on a present object position (xp) and present object motion data (301,303) derived from the image signal, where the present object position is defined in a field of view comprising the spatial light pattern (110) and the monitor (101).

4. A control device according to claim 1, wherein the light emitter controller (104) is configured to control light emission from the light emitters (111) depending on a present object position (xp) and a future object position (xf), the present and future object positions being derived from the image signal, and the present and future object positions being defined in a field of view comprising the spatial light pattern (110) and the monitor (101).

5. A control device according to claim 4, wherein the light emitter controller (104) is configured to control light emission from the light emitters (111) depending on a period of time and/or a distance separating the present object position (xp) and the future object position (xf).

6. A control device according to claim 1, wherein the light emitter controller (104) is configured to control light emission from the light emitters (111) by adjusting color and/or intensity of the light emission from individual light emitters (111) so that the color and/or intensity of the spatial light pattern (110) resembles color and/or intensity of the object (120) of the image signal.

7. An ambient light device configured to visualize objects (120) of an image signal comprising video content for displaying on a monitor (101), the ambient light device comprising,
- the control device (103) according to claim 1, and
- an ambient light source (102) comprising the light emitters.

8. A display device (100) configured to visualize objects (120) of an image signal comprising video content for displaying on a monitor (101), the image display device comprising:
- the ambient light device according to claim 7, and
- a monitor (101) for displaying the video content.

9. A method for visualizing an object (120) of an image signal comprising video content for displaying on a monitor (101), the method comprising:
- generating a spatial light pattern for visualizing the object (120) using a light emitter controller (104) connected to light emitters (111) of an ambient light source (102) and configured to control said light emitters (111) for controlling light emission from the light emitters (111) using object motion data (301,303) derived from the image signal, and
- controlling light emission from the light emitters (111) depending on where the object passes an edge (302) of the monitor (101), **characterized in that** said controlling light emission is performed by using motion data of an object which is about to move into the monitor.

10. A computer program causing a processor to carry out the method of claim 9.

## Patentansprüche

1. Steuervorrichtung (103) zum Erzeugen einer Visualisierung eines Objektes (120) eines Bildsignals, das Videoinhalt zum Anzeigen auf einem Monitor (101) enthält, wobei die Vorrichtung (103) umfasst:
- eine Lichtemitter-Steuereinheit (104), die mit Lichtemittern (111) einer Umgebungslichtquelle (102) verbunden und dazu eingerichtet ist, die Lichtemitter (111) zu steuern, wobei die Lichtemitter-Steuereinheit (104) dazu eingerichtet ist, ein räumliches Lichtmuster zum Visualisieren des Objektes (120) durch Steuern der Lichtemission von den Lichtemittern (111) mit Hilfe von Objektbewegungsdaten (301, 303) zu erzeugen, die aus dem Bildsignal abgeleitet werden, wobei
- die Lichtemitter-Steuereinheit (104) dazu eingerichtet ist, die Lichtemission von den Lichtemittern (111) in Abhängigkeit davon zu steuern, an welcher Stelle das Objekt einen Rand (302) des Monitors (101) passiert,
**dadurch gekennzeichnet, dass** die Steuerung der Lichtemission mit Hilfe von Bewegungsdaten eines Objektes ausgeführt wird, dass im Begriff ist, sich in den Monitor zu bewegen.

2. Steuervorrichtung nach Anspruch 1, bei der die Lichtemitter-Steuereinheit (104) dazu eingerichtet ist, die Lichtemission von den Lichtemittern durch Einstellen der Lichtemission von den einzelnen Lichtemittern (111) in Erwiderung auf die Objektbewegungsdaten (301, 303) derart zu steuern, dass eine Zeitabhängigkeit des räumlichen Lichtmusters die Bewegung des Objekts (120) visualisiert.

3. Steuervorrichtung nach Anspruch 1, bei der die Lichtemitter-Steuereinheit (104) dazu eingerichtet ist, die Lichtemission von den Lichtemittern (111) in Abhängigkeit einer gegenwärtigen Objektposition (xp) und gegenwärtiger Objektbewegungsdaten (301, 303) zu steuern, die aus dem Bildsignal abgeleitet werden, wobei die gegenwärtige Objektposition in einem Sichtfeld definiert wird, das das räumliche Lichtmuster (110) und den Monitor (101) umfasst.

4. Steuervorrichtung nach Anspruch 1, bei der die Lichtemitter-Steuereinheit (104) dazu eingerichtet ist, die Lichtemission aus den Lichtemittern (111) in Abhängigkeit einer gegenwärtigen Objektposition (xp) und einer zukünftigen Objektposition (xf) zu steuern, wobei die gegenwärtige und die zukünftige Objektposition aus dem Bildsignal abgeleitet werden und die gegenwärtige sowie die zukünftige Objektposition in einem Sichtfeld definiert werden, das das räumliche Lichtmuster (110) und den Monitor (101) umfasst.

5. Steuervorrichtung nach Anspruch 4, bei der die Lichtemitter-Steuereinheit (104) dazu eingerichtet ist, die Lichtemission von den Lichtemittern (111) in Abhängigkeit einer Zeitperiode und/oder eines Abstandes zu steuern, durch die die gegenwärtige Objektposition (xp) und die zukünftige Objektposition (xf) voneinander getrennt werden.

6. Steuervorrichtung nach Anspruch 1, bei der die Lichtemitter-Steuereinheit (104) dazu eingerichtet ist, die Lichtemission von den Lichtemittern (111) durch Einstellen der Farbe und/oder der Intensität der Lichtemission von einzelnen Lichtemittern (111) derart zu steuern, dass die Farbe und/oder die Intensität des räumlichen Lichtmusters (110) die Farbe und/oder die Intensität des Objektes (120) des Bildsignals wiedergibt.

7. Umgebungslichtvorrichtung, die dazu eingerichtet ist, Objekte (120) eines Bildsignals zu visualisieren, das Videoinhalt zum Anzeigen auf einem Monitor (101) enthält, wobei die Umgebungslichtvorrichtung umfasst:
- eine Steuervorrichtung (103) nach Anspruch 1, und
- eine Umgebungslichtquelle (102), die die Lichtemitter umfasst.

8. Anzeigevorrichtung (100), die dazu eingerichtet ist, Objekte (120) eines Bildsignals zu visualisieren, das Videoinhalt zum Anzeigen auf einem Monitor (101) enthält, wobei die Bildanzeigevorrichtung umfasst:
- die Umgebungslichtvorrichtung nach Anspruch 7, und
- einen Monitor (101) zum Anzeigen des Videoinhaltes.

9. Verfahren zum Visualisieren eines Objektes (120) eines Bildsignals das Videoinhalt zum Anzeigen auf einem Monitor (101) enthält, wobei das Verfahren umfasst:
- Erzeugen eines räumlichen Lichtmusters zum Visualisieren des Objektes (120) mit Hilfe einer Lichtemitter-Steuereinheit (104), die mit den Lichtemittern (111) einer Umgebungslichtquelle (102) verbunden und dazu eingerichtet ist, die Lichtemitter (111) zu steuern, um die Lichtemission aus den Lichtemittern (111) mit Hilfe von Objektbewegungsdaten (301, 303) zu steuern, die aus dem Bildsignal abgeleitet werden, und
- Steuern der Lichtemission von den Lichtemittern (111) in Abhängigkeit davon, an welcher Stelle das Objekt einen Rand (302) des Monitors (101) passiert;
**dadurch gekennzeichnet, dass** die Steuerung der Lichtemission mit Hilfe von Bewegungsdaten eines Objektes ausgeführt wird, das im Begriff ist, sich in den Monitor zu bewegen.

10. Computerprogramm, das einen Prozessor veranlasst, das Verfahren nach Anspruch 9 auszuführen.

## Revendications

1. Dispositif de commande (103) pour la visualisation d'un objet (120) d'un signal d'image comprenant un contenu vidéo pour affichage sur un moniteur (101), le dispositif de commande (103) comprenant:
- un contrôleur d'émetteurs de lumière (104) relié à des émetteurs de lumière (111) d'une source de lumière ambiante (102) et configuré pour commander lesdits émetteurs de lumière (111), le contrôleur d'émetteurs de lumière (104) étant configuré pour générer un motif lumineux spatial pour la visualisation de l'objet (120) par la commande de l'émission de lumière issue des émetteurs de lumière (111) au moyen de données de mouvement d'objets (301, 303) dérivées du signal d'image,
et dans lequel
- le contrôleur d'émetteurs de lumière (104) est configuré pour commander l'émission de lumière issue des émetteurs de lumière (111) en fonction de l'endroit où l'objet franchit un bord (302) du moniteur (101), **caractérisé en ce que** ladite commande d'émission de lumière est réalisée au moyen de données de mouvement d'un objet qui est sur le point d'entrer dans le moniteur.

2. Dispositif de commande selon la revendication 1, dans lequel le contrôleur d'émetteurs de lumière (104) est configuré pour commander l'émission de lumière issue des émetteurs de lumière en ajustant l'émission de lumière issue d'émetteurs de lumière individuels (111) en réponse aux données de mouvement d'objet (301, 303) de sorte qu'une dépendance temporelle du motif lumineux spatial visualise le mouvement de l'objet (120).

3. Dispositif de commande selon la revendication 1, dans lequel le contrôleur d'émetteurs de lumière (104) est configuré pour commander l'émission de lumière issue des émetteurs de lumière (111) en fonction d'une position d'objet actuelle (xp) et de données de mouvement d'objet (301, 303) actuelles dérivées du signal d'image, où la position d'objet actuelle est définie dans un champ de vision comprenant le motif lumineux spatial (110) et le moniteur (101).

4. Dispositif de commande selon la revendication 1, dans lequel le contrôleur d'émetteurs de lumière (104) est configuré pour commander l'émission de lumière issue des émetteurs de lumière (111) en fonction d'une position d'objet actuelle (xp)et d'une position d'objet future (xf), les positions d'objet actuelle et future étant dérivées du signal d'image, et les positions d'objet actuelle et future étant définies dans un champ de vision comprenant le motif lumineux spatial (110) et le moniteur (101).

5. Dispositif de commande selon la revendication 4, dans lequel le contrôleur d'émetteurs de lumière (104) est configuré pour commander l'émission de lumière issue des émetteurs de lumière (111) en fonction d'une période de temps et/ou d'une distance séparant la position d'objet actuelle (xp) et la position d'objet future (xf).

6. Dispositif de commande selon la revendication 1, dans lequel le contrôleur d'émetteurs de lumière (104) est configuré pour commander l'émission de lumière issue des émetteurs de lumière (111) en ajustant la couleur et/ou l'intensité de l'émission de lumière issue d'émetteurs de lumière (111) individuels de sorte que la couleur et/ou l'intensité du motif lumineux spatial (110) ressemble à la couleur et/ou à l'intensité de l'objet (120) du signal d'image.

7. Dispositif à lumière ambiante configuré pour visualiser des objets (120) d'un signal d'image comprenant un contenu vidéo pour affichage sur un moniteur (101), le dispositif à lumière ambiante comprenant :
- le dispositif de commande (103) selon la revendication 1, et
- une source de lumière ambiante (102) comprenant les émetteurs de lumière.

8. Dispositif d'affichage (100) configuré pour visualiser des objets (120) d'un signal d'image comprenant un contenu vidéo pour affichage sur un moniteur (101), le dispositif d'affichage d'image comprenant :
- le dispositif à lumière ambiante selon la revendication 7, et
- un moniteur (101) pour afficher le contenu vidéo.

9. Procédé de visualisation d'un objet (120) d'un signal d'image comprenant le contenu vidéo pour affichage sur un moniteur (101), le procédé comprenant les étapes suivantes :
- générer un motif lumineux spatial pour visualiser l'objet (120) au moyen d'un contrôleur d'émetteurs de lumière (104) relié à des émetteurs de lumière (111) d'une source de lumière ambiante (102) et configuré pour commander lesdits émetteurs de lumière (111) afin de commander l'émission de lumière issue des émetteurs de lumière (111) au moyen de données de mouvement d'objet (301, 303) dérivées du signal d'image, et
- commander l'émission de lumière issue des émetteurs de lumière (111) en fonction de l'endroit où l'objet franchit un bord (302) du moniteur (101), **caractérisé en ce que** ladite commande de l'émission de lumière est réalisée au moyen de données de mouvement d'un objet qui est sur le point d'entrer dans le moniteur.

10. Programme informatique destiné à faire exécuter le procédé selon la revendication 9 par un processeur.
